# EUROPÄISCHE PATENTSCHRIFT

(11) **EP 3 602 707 B1**
(45) Veröffentlichungstag und Bekanntmachung des Hinweises auf die Patenterteilung: **11.05.2022**
(21) Anmeldenummer: 18710012.8
(22) Anmeldetag: 07.03.2018
(51) Int. Cl.: H01T 21/06

(54) **VORRICHTUNG ZUM EINSTELLEN DES ELEKTRODENABSTANDES VON EINER ZÜNDKERZE**
DEVICE FOR SETTING THE ELECTRODE GAP ON A SPARK PLUG
DISPOSITIF POUR RÉGLER L'ÉCART ENTRE ÉLECTRODES D'UNE BOUGIE D'ALLUMAGE

(30) Priorität: 29.03.2017 DE 102017205285
(43) Veröffentlichungstag der Anmeldung: 05.02.2020
(73) Patentinhaber: Robert Bosch GmbH, 70442 Stuttgart (DE)
(72) Erfinder: CLAUS, Nicolai, 71254 Ditzingen (DE)
(86) Internationale Anmeldenummer: PCT/EP2018/055531
(87) Internationale Veröffentlichungsnummer: WO 2018/177700

(56) Entgegenhaltungen:
- DE-A1-102011 013 657
- US-A- 2 549 165
- US-A- 2 645 142
- US-A- 2 670 643

## Beschreibung

### Stand der Technik

Die vorliegende Erfindung betrifft eine Vorrichtung sowie ein Verfahren zur Einstellung des Abstandes zwischen einer ersten Elektrode und einer zweiten Elektrode einer Zündkerze.

Zündkerzen sind aus dem Stand der Technik in unterschiedlichen Ausgestaltungen bekannt und werden beispielsweise zur Zündung eines Brennstoff- Sauerstoff Gemisches verwendet. Die Anforderungen an die Zündkerzen werden hinsichtlich Robustheit, Widerständen, Temperaturen und Betriebsstunden größer, was zu neuen Herausforderungen bei der Entwicklung von Zündkerzen führt. Insbesondere im Bereich der Industriegasmotoren sind die Anforderungen an die Zündkerzen stark gestiegen und es werden bis zu 6000 Betriebsstunden oder mehr gefordert.

Die Lebensdauer einer Zündkerze wird durch die Korrosions- und Erosionsbeständigkeit des Elektrodenmaterials bestimmt. Bedingt durch das Zündfunkenplasma und einer Oxidation der Elektrodenoberflächen kommt es zu einer Aufweitung des Elektrodenabstandes, was letztendlich zu einem Versagen der Zündkerzen führt. Um die Korrosions- und Erosionsbeständigkeit der Elektroden zu verbessern, werden Edelmetalllegierungen, meist aus Platin oder Iridium, eingesetzt. Der Verschleiß der Elektroden der Zündkerzen ist jedoch hauptsächlich durch die sich unter Betriebsbedingungen bei der Befunkung bildende Elektrodenoberfläche bestimmt, die von der Wechselwirkung mit dem Funkenplasma und der Brennraumatmosphäre abhängt.

Aufgrund der hohen Kosten für eine Zündkerze, insbesondere für Zündkerzen eines Industriegasmotors, und der großen Anzahl von Zündkerzen in einer solchen Arbeitskraftmaschine, ist es kostengünstiger den Abstand der Elektroden nachzustellen, anstatt die Zündkerzen nach einer vorgegeben Anzahl von Betriebsstunden auszutauschen.

Das Einstellen des Abstandes zwischen der ersten Elektrode und der zweiten Elektrode erfolgt manuell durch ein Bedienpersonal, beispielsweise mittels einer Zange oder eines Schlagwerkzeuges und ist somit mühsam, zeitaufwendig und fehlerbehaftet. Insbesondere Schläge auf Elektroden können zu Brüchen in den Edelmetallschweißnähten oder der keramischen Isolierung führen und somit die Lebensdauer senken oder die Zündkerze zerstören. Auch kann eine der Elektroden in den Isolator gedrückt werden, wodurch die Zündkerze zerstört ist.

Der Abstand zwischen der ersten und der zweiten Elektrode sowie die Überdeckung der Elektroden sind oftmals nach dem Einstellen ungenau, so dass Zündkerzen mit derart eingestellten Elektrodenabständen kurze Wartungsintervalle erfordern und eine verkürzte Lebensdauer aufweisen. Darüber hinaus führt das zeitaufwendige Einstellen des Elektrodenabstandes zu lang andauernden Stillständen des Industriegasmotors und somit zu erheblichen Produktionsausfällen.

Vorrichtungen zum Einstellen eines Elektrodenabstands bei Zündkerzen sind bekannt aus der US 2 670 643 A, der US 2 645 142 A und der US 2 549 165 A.

### Offenbarung der Erfindung

Die erfindungsgemäße Vorrichtung zum Einstellen des Abstandes zwischen einer ersten Elektrode und einer zweiten Elektrode einer Zündkerze weist demgegenüber den Vorteil auf, dass das Einstellen des Abstandes zwischen der ersten Elektrode und der zweiten Elektrode der Zündkerze unabhängig von einem Bedienpersonal exakt und reproduzierbar innerhalb kürzester Zeit möglich ist. Dadurch kann der Stillstand der Arbeitskraftmaschine auf das Kürzeste minimiert und die Produktivität gesteigert werden. Ferner kann durch den Einsatz einer erfindungsgemäßen Vorrichtung verhindert werden, dass die Zündkerzen bei dem Einstellen des Abstandes zwischen den Elektroden aufgrund von überdimensionierten Umformkräften beschädigt oder zerstört werden. Erfindungsgemäß wird dies durch die Vorrichtung derart gelöst, dass die Vorrichtung wenigstens ein Widerlager, eine Abstandsplatte und einen Stempel umfasst, wobei das Widerlager eingerichtet ist, die Zündkerze entlang einer Längsachse entgegen einer Zustellrichtung abzustützen, wobei die Abstandsplatte zwischen dem Widerlager und dem Stempel angeordnet ist, wobei die Abstandsplatte eingerichtet ist, zwischen der ersten Elektrode und der zweiten Elektrode positioniert zu sein, und wobei der Stempel eingerichtet ist, eine Umformkraft in der Zustellrichtung auf die zweite Elektrode aufzubringen. Der Stempel presst folglich die zweite Elektrode in Richtung zur ersten Elektrode, wobei der Abstand zwischen der ersten und zweiten Elektrode durch die Abstandsplatte vorgegeben ist und somit reproduzierbar ist. Im richtig eingestellten Zustand liegen somit die erste und zweite Elektrode an der Abstandsplatte an.

Es ist erfindungsgemäß vorgesehen, dass die Vorrichtung einen Kraftbegrenzer umfasst, welcher eine maximale Umformkraft des Stempels begrenzt.

Die Unteransprüche zeigen bevorzugte Weiterbildungen der Erfindung.

Weiterhin bevorzugt weist der Stempel einen Kraftbegrenzer auf, durch den die maximale Umformkraft die auf die zweite Elektrode wirkt, begrenzt ist. Der Kraftbegrenzer ist hierzu bevorzugt zwischen dem Stempel und einem Stempelantrieb positioniert. Zu hohe Umformkräfte können beispielsweise zum Brechen einer Schweißnaht führen, durch die die zweite Elektrode mit einem Zündkerzengehäuse verbunden ist. Beim Umformen der zweiten Elektrode ist diese über die Abstandsplatte gegen die erste Elektrode gedrückt, wobei zu hohe Umformkräfte eine Isolierung zwischen der ersten und der zweiten Elektrode zerstören können oder die erste Elektrode in die Isolierung hineindrücken können.

Vorzugsweise ist der Stempel durch einen Hebelmechanismus oder Linearantrieb, insbesondere einen Spindelantrieb, angetrieben, wodurch die Vorrichtung durch ein Bedienpersonal manuell betätigbar ist. Der Hebelmechanismus kann einen Handgriff aufweisen, der mittels einer oder mehrerer Hebelstangen mit dem Stempel trieblich gekoppelt ist, wodurch eine Schwenkbewegung des Handgriffes eine Zustellung des Stempels entlang der Längsachse bewirkt. Der Hebelmechanismus kann darüber hinaus nach Art eines Kniehebels ausgebildet sein, wodurch einerseits der maximale Zustellungsweg begrenzt ist und andererseits eine große Umformkraft auf die zweite Elektrode aufgebracht werden kann. Alternativ zu dem Hebelmechanismus können Linearantriebe in unterschiedlichen Ausgestaltungen verwendet werden, beispielsweise manuell oder maschinell angetriebene Linearantriebe, hydraulische oder pneumatische Linearantriebe oder Spindelantriebe.

Gemäß einer weiteren bevorzugten Ausgestaltung weist die Vorrichtung mindestens eine Anlagefläche auf, durch die die Ausrichtung der Zündkerze um die Längsachse vorgegeben ist. Zündkerzen weisen typischerweise auf der der Elektroden abgewandten Seite des Zündkerzengehäuses eine Sechskantform auf, durch die die Zündkerze mittels eines entsprechenden Werkzeuges montiert werden kann. Die Anlagefläche korrespondiert vorzugsweise zu dem Zündkerzengehäuse bzw. dem Sechskant, wodurch durch die Anlagefläche die Ausrichtung der Zündkerze um die Längsachse und somit ebenfalls die Ausrichtung der zweiten Elektrode in der Vorrichtung vorgegeben ist.

Darüber hinaus ist besonders vorteilhaft, wenn mindestens eine Clipsverbindung vorgesehen ist, durch die die Zündkerze in dem Widerlager bzw. in der Vorrichtung gehalten ist. Die Zündkerze kann somit unkompliziert in das Widerlager eingesetzt werden und ist durch die Clipsverbindung fixiert gehalten. Dies ermöglicht eine besonders einfache Handhabung für das Bedienpersonal, da die Vorrichtung mit einer ersten Hand gehalten werden kann und mit einer zweiten Hand die Vorrichtung betätigt werden kann, ohne dass weitere Hilfsmittel nötig sind. Darüber hinaus ist die Zündkerze durch die Clipsverbindung vor Beschädigungen durch ein ungewünschtes Herausfallen gesichert. Alternativ ist eine Aufnahme vorgesehen, welche zumindest teilweise eine Negativform der einzulegenden Zündkerze, z.B. eine Form für den Werkzeugansetzbereich, insbesondere Sechskant, der Zündkerze aufweist.

Vorzugsweise ist das Widerlager mittels eines Schlittens entlang der Längsachse beweglich gelagert gehalten und arretierbar, so dass auch unterschiedlich lang bemessene Zündkerzen in die Vorrichtung einsetzbar sind. Der Schlitten und/oder die Anlageflächen können darüber hinaus austauschbar sein, um unterschiedliche Zündkerzengehäuseformen aufnehmen zu können.

Gemäß einer weiteren vorteilhaften Ausgestaltung sind an dem Stempel ein oder mehrere Nocken oder mindestens eine Nut angeformt oder angearbeitet, durch die die zweite Elektrode bei dem Biegevorgang in mindestens einer Ebene senkrecht zu der Längsachse abgestützt ist. Durch die Nocken oder die Nut ist sichergestellt, dass die erste Elektrode und die zweite Elektrode eine exakte Überdeckung nach Abschluss des Umformens aufweisen.

Weiter bevorzugt ist die Abstandsplatte austauschbar angeordnet. Somit können unterschiedlich dicke Abstandsplatten verwendet werden.

Ein weiterer Aspekt der vorliegenden Erfindung betrifft ein Verfahren zur Einstellung des Abstandes zwischen einer ersten Elektrode und einer zweiten Elektrode einer Zündkerze. In einem ersten Verfahrensschritt ist die Zündkerze in ein Widerlager einer Vorrichtung eingesetzt, wobei eine Abstandsplatte zwischen die erste Elektrode und die zweite Elektrode eingeschoben ist. In einem zweiten Verfahrensschritt ist eine Umformkraft mittels eines Stempels auf die zweite Elektrode aufgebracht und die zweite Elektrode somit in Richtung der ersten Elektrode gebogen, derart, dass die zweite Elektrode die Abstandsplatte kontaktiert. Anschließend kann die Zündkerze aus der Vorrichtung entnommen werden. Durch die Abstandsplatte ist auch bei unterschiedlicher Abnutzung der ersten Elektrode und der zweiten Elektrode stets ein konstanter Abstand zwischen diesen einstellbar.

Weiterhin vorteilhaft ist es, wenn der Stempel durch einen Hebelmechanismus oder einen Linearantrieb angetrieben ist. Der Hebelmechanismus oder der Linearantrieb ermöglichen eine besonders einfache und ergonomische Bedienung der Vorrichtung.

Darüber hinaus ist es weiterhin besonders vorteilhaft, wenn die Umformkraft des Stempels mittels eines Kraftbegrenzers begrenzt ist, um die Zündkerze vor zu großen Umformkräfte zu schützen.

### Zeichnung

Nachfolgend wird ein bevorzugtes Ausführungsbeispiel der Erfindung unter Bezugnahme auf die beiliegende Zeichnung im Detail beschrieben. In der Zeichnung ist:
- Figur 1: eine schematische Schnittansicht einer Zündkerze,
- Figur 2: eine schematische Darstellung einer erfindungsgemäßen Vorrichtung zum Einstellen des Abstandes zwischen einer ersten Elektrode einer zweiten Elektrode von der Zündkerze, und
- Figur 3: eine schematische Schnittansicht der Vorrichtung gemäß Figur 2. Bevorzugte Ausführungsform der Erfindung

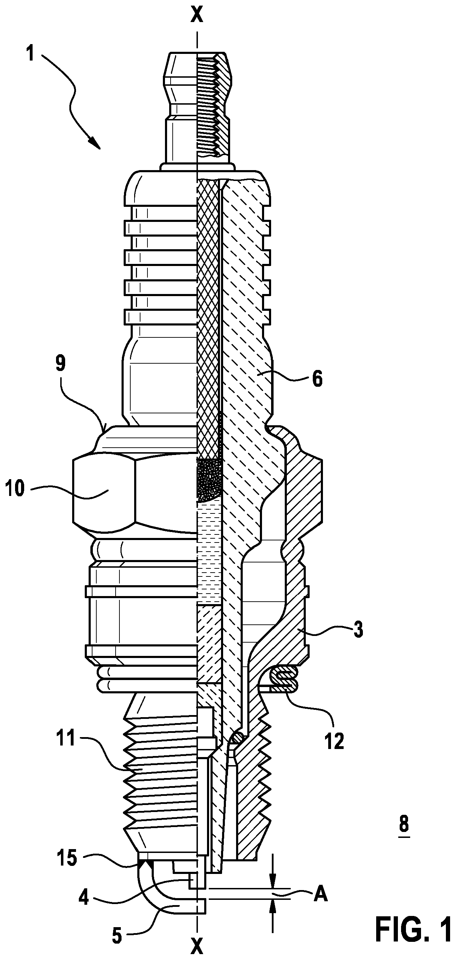

Nachfolgend wird unter Bezugnahme auf die Figuren 1 bis 3 eine Vorrichtung 2 zum Einstellen eines Abstandes A zwischen einer ersten Elektrode 4 und einer zweiten Elektrode 5 von einer Zündkerze 1 gemäß einem ersten bevorzugten Ausführungsbeispiel der Erfindung im Detail beschrieben.

Wie aus Figur 1 ersichtlich, umfasst die Zündkerze 1 die erste Elektrode 4 und die zweite Elektrode 5, die in einem vorgegebenen Abstand A in der Längsachse X-X überdeckend und beabstandet angeordnet sind. Die erste Elektrode 4, auch Mittelelektrode genannt, ist koaxial auf der Längsachse X-X ausgerichtet und von einem keramischen Isolator 6 in bekannter Weise umgeben.

Weiterhin umfasst die Zündkerze 1 ein Zündkerzengehäuse 3, welches aus einem metallischen Material hergestellt ist. Das Zündkerzengehäuse 3 ist dabei an einem zu einem Brennraum 8 gerichteten Bereich des Isolators 6 vorgesehen und umfasst die zweite Elektrode 5, ein Anschlussgewinde 11, eine äußere Dichtung 12 und einen Sechskant 10. Durch den Sechskant 10 kann die Zündkerze 1 mittels eines geeigneten Werkzeugs, beispielsweise eines Maulschlüssels, derart an einer Arbeitskraftmaschine befestigt werden, dass die äußere Dichtung 12 den Gewindespalt des Anschlussgewindes 11 absolut gas- und flüssigkeitsdicht verschließt. Die der zweiten Elektrode 5 abgewandte Stirnseite des Zündkerzengehäuses 3 ist nachfolgend als Anschlagsfläche 9 bezeichnet.

Das metallische Zündkerzengehäuse 3 ist elektrisch leitfähig. Auf der dem Brennraum 8 zugewandten Seite des Zündkerzengehäuses 3 ist die zweite Elektrode 5 - auch Massenelektrode genannt - angeordnet und mittels einer Verschweißung 15 mit diesem verbunden. Die zweite Elektrode 5 ist L-förmig ausgebildet, so dass diese in der Längsachse X-X zu der ersten Elektrode 4 beabstandet und überdeckend angeordnet ist. Folglich bildet sich bei einer Befunkung der Zündkerze 1 ein Lichtbogen im Bereich der Längsachse X-X zwischen der ersten Elektrode 4 und der zweiten Elektrode 5.

Bedingt durch das Funkenplasma und einer Oxidation der Oberflächen der ersten Elektrode 4 und der zweiten Elektrode 5 kommt es zu einer Aufweitung bzw. Vergrößerung des Abstandes A zwischen diesen, welches zu einer Fehlfunktion der Zündkerze 1 führt. Um den Abstand A zwischen der ersten Elektrode 4 und der zweiten Elektrode 5 nach gegebener Betriebsdauer nachzustellen, ist die Zündkerze 1 aus dem Brennraum 8 zu entnehmen und der Abstand A ist mittels der Vorrichtung 2 einzustellen.

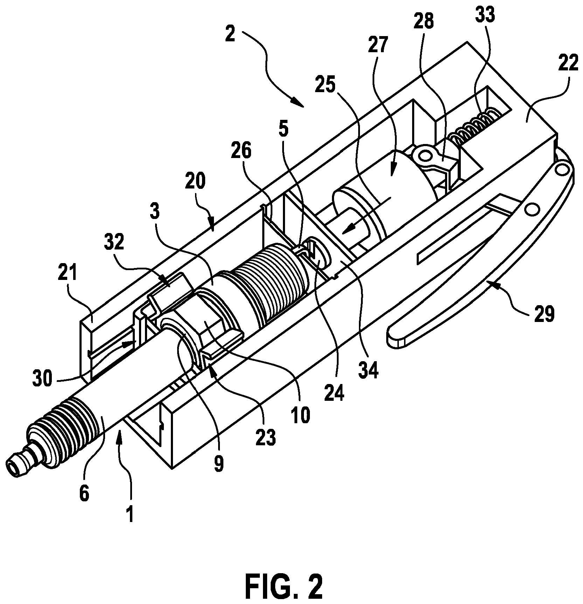

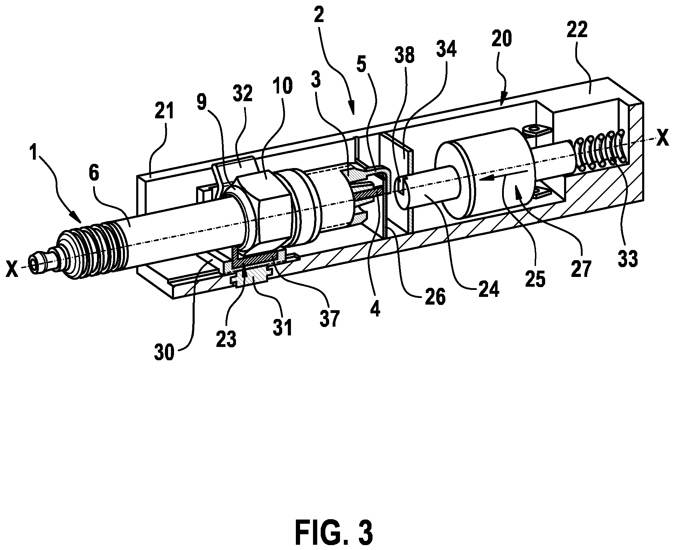

Die Vorrichtung 2 zum Einstellen des Abstandes A zwischen der ersten Elektrode 4 und der zweiten Elektrode 5 ist den Figuren 2 und 3 zu entnehmen.

Die Vorrichtung 2 umfasst ein Gehäuse 20 mit einem ersten freien Ende 21 und einem zweiten freien Ende 22, ein Widerlager 23, eine Abstandsplatte 26 und einen Stempel 24. An dem ersten freien Ende 21 des Gehäuses 20 ist das Widerlager 23 und an dem zweiten freien Ende 22 der Stempel 24 angeordnet, der mittels eines Hebelmechanismus 28 in eine Zustellrichtung 25 entlang der Längsachse X-X der Vorrichtung beweglich ist. Der Stempel 24 ist hierzu durch eine Führung 34 auf der Längsachse X-X beweglich gelagert.

Durch das Widerlager 23 ist die in die Vorrichtung 2 eingesetzte Zündkerze 1 entgegen der Zustellrichtung 25 mittels der Anschlagsfläche 9 gelagert. Die Zündkerze 1 ist folglich derart in die Vorrichtung 2 eingesetzt, dass die erste Elektrode 4 und die zweite Elektrode 5 auf der dem Stempel 24 zugewandten Seite in der Vorrichtung 2 positioniert sind und die den Elektroden abgewandte Seite des Zündkerzengehäuses 3, die Anschlagsfläche 9, an dem Widerlager 23 anliegt. Weiterhin ist in dem Gehäuse 20 die Abstandsplatte 26 positioniert, die beim Einsetzen der Zündkerze 1 zwischen die erste Elektrode 4 und die zweite Elektrode 5 eingeführt ist.

In dem Bereich des Widerlagers 23 ist darüber hinaus eine Anlagefläche 37 und eine Clipsverbindung 32 angeordnet, wobei die Anlagefläche 37 und die Clipsverbindung 32 mit der Form des Zündkerzengehäuses 3 bzw. dem Sechskant 10 korrespondieren bzw. bereichsweise die Negativform des Zündkerzengehäuses 3 aufweisen. Durch die Anlagefläche 37 ist die Ausrichtung der zweiten Elektrode 5 in der Vorrichtung 2 vorgegeben und dadurch sichergestellt, dass die zweite Elektrode 5 die Abstandsplatte 26 bestmöglich umgreift.

Die Clipsverbindung 32 arretiert die Zündkerze in der Vorrichtung 2 und schützt diese vor einem ungewünschten Herausfallen. Somit ist die Zündkerze fest in der Vorrichtung 2 aufgenommen.

Die Abstandsplatte 26 ist aus einem druckfesten Werkstoff hergestellt und weist eine vorgegebene Dicke auf. Die Dicke der Abstandsplatte 26 gibt den Abstand A zwischen der ersten Elektrode 4 und der zweiten Elektrode 5 nach dem Einstellvorgang vor. In Abhängigkeit von dem einzustellenden Abstand A kann die Abstandsplatte 26 ausgetauscht werden.

Der betätigte Zustand der Vorrichtung 2 ist Figur 2 zu entnehmen. Durch die Betätigung eines Handgriffes 29, der betrieblich mittels des Hebelmechanismus 28 mit dem Stempel 24 gekoppelt ist, ist der Stempel 24 entlang der Längsachse X-X in Zustellrichtung 25 bewegt. Durch den Stempel 24 wirkt die Umformkraft auf die zweite Elektrode 5, wodurch die zweite Elektrode 5 in Richtung der ersten Elektrode 4 soweit gebogen ist, dass die Abstandsplatte 26 zwischen der ersten Elektrode 4 unter zweiten Elektrode 5 beide Elektroden berührt. Nach Abschluss des Umformvorganges ist der Stempel 24 durch einen Rücksteller 33 in die Ausgangsposition zurückgeführt. Durch ein Öffnen der Clipsverbindung 32 kann die Zündkerze 1 aus der Vorrichtung 2 entnommen werden.

Die Zündkerze 1 wird vor zu hohen Umformkräften durch einen Kraftbegrenzer 27 geschützt, der zwischen dem Hebelmechanismus 28 und dem Stempel 24 angeordnet ist. Durch den Kraftbegrenzer 27 ist die maximale axiale auf die Zündkerze 1 wirkende Umformkraft begrenzt. Der Kraftbegrenzer 27 schützt die Zündkerze 1 beispielsweise davor, dass die erste Elektrode 4 in den Isolator 6 gepresst ist oder dass die Verschweißung 15 der zweiten Elektrode 5 brechen.

Der unbetätigte Zustand der Vorrichtung 2 ist Figur 3 zu entnehmen. Auf der der Zündkerze 1 zugewandten Seite des Stempels 24 kann bevorzugt eine Nut vorgesehen sein. Die Nut umgreift bei der Betätigung der Vorrichtung 2 die zweite Elektrode 5 bereichsweise. Einerseits ist dadurch ein Biegedrillen der zweiten Elektrode 5 verhindert und anderseits ist eine fehlerhafte Überdeckung korrigiert. Somit ist sichergestellt, dass die erste Elektrode 4 und die zweite Elektrode 5 nach dem Umformen exakt überdeckend in der Längsachse X-X ausgerichtet sind. Die Ausrichtung der Nut korrespondiert dabei zu der Ausrichtung der zweiten Elektrode 5.

Aufgrund der unterschiedlichen Bauformen von Zündkerzen 1 ist das Widerlager 23 mittels eines Schlittens 30 entlang der Längsachse X-X verstellbar und arretierbar gehalten, wodurch unterschiedlich lang bemessene Zündkerzen 1 in die Vorrichtung 2 einsetzbar sind. Damit die Vorrichtung 2 auch unterschiedlichen Zündkerzengehäusen 3 gerecht wird, ist das Widerlager 23 bzw. die Anlagefläche 37 vorzugsweise austauschbar. Die Vorrichtung 2 kann somit zum Einstellen des Abstandes A zwischen der ersten Elektrode 4 und der zweiten Elektrode 5 von Zündkerzen 1 sämtlicher Bauformen verwendet werden. Die Verstellung und Arretierung des Schlittens 30 kann beispielsweise mittels einer Stellschraube 31 erfolgen. Darüber hinaus kann die Vorrichtung 2 auch derart ausgestaltet sein, dass zwei oder mehrere Zündkerzen gleichzeitig eingestellt werden können.

Somit kann erfindungsgemäß eine Vorrichtung 2 und ein Verfahren zum Einstellen des Abstandes A zwischen der ersten Elektrode 4 und der zweiten Elektrode 5 einer Zündkerze 1 bereitgestellt werden, das ein zuverlässiges und reproduzierbares Einstellen des Abstandes A ermöglicht. Während des Einstellvorgangs kann das Gehäuse 20 der Vorrichtung in der einen Hand gehalten werden und der Hebelmechanismus mit der anderen Hand betätigt werden.

## Patentansprüche

1. Vorrichtung (2) zum Einstellen eines Abstandes (A) zwischen einer ersten Elektrode (4) und einer zweiten Elektrode (5) einer Zündkerze (1), umfassend:
- wenigstens ein Widerlager (23), eine Abstandsplatte (26) und einen Stempel (24), die entlang einer Längsachse (X-X) angeordnet sind,
- wobei das Widerlager (23) eingerichtet ist, die Zündkerze (1) abzustützen,
- wobei die Abstandsplatte (26) in Richtung der Längsachse (X-X) zwischen dem Widerlager (23) und dem Stempel (24) angeordnet ist,
- wobei die Abstandsplatte (26) eingerichtet ist, zwischen der ersten Elektrode (4) und der zweiten Elektrode (5) angeordnet zu sein, und
- wobei der Stempel (24) eingerichtet ist, eine Umformkraft in Richtung der Längsachse (X-X) auf die zweite Elektrode (5) aufzubringen,
- **dadurch gekennzeichnet, dass** die Vorrichtung (2) einen Kraftbegrenzer (27) umfasst, welcher eine maximale Umformkraft des Stempels (24) begrenzt.

2. Vorrichtung (2) nach Anspruch 1, ferner umfassend einen Hebelmechanismus (28), welcher den Stempel (24) in Richtung der Längsachse (X-X) bewegt.

3. Vorrichtung (2) nach Anspruch 1, ferner umfassend einen Linearantrieb, insbesondere einen Spindelantrieb, welcher den Stempel (24) in Richtung der Längsachse (X-X) bewegt.

4. Vorrichtung (2) nach einem der vorhergehenden Ansprüche, **dadurch gekennzeichnet, dass** mindestens eine Anlagefläche (37) vorgesehen ist, die eingerichtet ist, die Ausrichtung der Zündkerze (1) um die Längsachse (X-X) vorzugegeben.

5. Vorrichtung (2) nach einem der vorhergehenden Ansprüche, **dadurch gekennzeichnet, dass** mindestens eine Clipsverbindung (32) vorgesehen ist, die eingerichtet ist, die Zündkerze (1) in der Vorrichtung (2) zu halten, oder dass eine Aufnahme vorgesehen ist, welche zumindest teilweise eine Negativform der einzulegenden Zündkerze aufweist.

6. Vorrichtung (2) nach einem der vorhergehenden Ansprüche, **dadurch gekennzeichnet, dass** das Widerlager (23) mittels eines Schlittens (30) entlang der Längsachse (X-X) beweglich gelagert ist.

7. Verfahren zur Einstellung eines Abstandes (A) zwischen einer ersten Elektrode (4) und einer zweiten Elektrode (5) einer Zündkerze (1), mittels einer Vorrichtung (2) nach einem der vorhergehenden Ansprüche, umfassend die Schritte:
- Einsetzen der Zündkerze (1) in die Vorrichtung (2), wobei eine Abstandsplatte (26) zwischen der ersten Elektrode (4) und der zweiten Elektrode (5) positioniert ist, und
- Aufbringen einer Umformkraft mittels eines Stempels (24) auf die zweite Elektrode (5), derart, dass die zweite Elektrode (5) die Abstandsplatte (26) kontaktiert.

8. Verfahren nach Anspruch 7, **dadurch gekennzeichnet, dass** der Stempel (24) durch einen Hebelmechanismus (28) oder einen Linearantrieb angetrieben ist.

9. Verfahren nach Anspruch 7 oder 8, **dadurch gekennzeichnet, dass** die Umformkraft des Stempels (24) mittels eines Kraftbegrenzers (27) begrenzt ist.

## Claims

1. Apparatus (2) for setting a distance (A) between a first electrode (4) and a second electrode (5) of a spark plug (1), comprising:
- at least one counterbearing (23), one spacer plate (26) and one punch (24) which are arranged along a longitudinal axis (X-X),
- wherein the counterbearing (23) is designed to support the spark plug (1),
- wherein the spacer plate (26) is arranged between the counterbearing (23) and the punch (24) in the direction of the longitudinal axis (X-X),
- wherein the spacer plate (26) is designed to be arranged between the first electrode (4) and the second electrode (5), and
- wherein the punch (24) is designed to apply a shaping force to the second electrode (5) in the direction of the longitudinal axis (X-X),
- **characterized in that** the apparatus (2) has a force limiter (27) which limits a maximum shaping force of the punch (24).

2. Apparatus (2) according to Claim 1, further comprising a lever mechanism (28) which moves the punch (24) in the direction of the longitudinal axis (X-X).

3. Apparatus (2) according to Claim 1, further comprising a linear drive, in particular a spindle drive, which moves the punch (24) in the direction of the longitudinal axis (X-X).

4. Apparatus (2) according to one of the preceding claims, **characterized in that** at least one contact area (37) is provided, which is designed to prespecify the orientation of the spark plug (1) around the longitudinal axis (X-X).

5. Apparatus (2) according to one of the preceding claims, **characterized in that** at least one clip connection (32) is provided, which is designed to hold the spark plug (1) in the apparatus (2), or **in that** a receptacle is provided, which has, at least in part, a negative shape of the spark plug to be inserted.

6. Apparatus (2) according to one of the preceding claims, **characterized in that** the counterbearing (23) is movably mounted along the longitudinal axis (X-X) by means of a slide (30).

7. Method for setting a distance (A) between a first electrode (4) and a second electrode (5) of a spark plug (1) by means of an apparatus (2) according to one of the preceding claims, comprising the steps of:
- inserting the spark plug (1) into the apparatus (2), wherein a spacer plate (26) is positioned between the first electrode (4) and the second electrode (5), and
- applying a shaping force to the second electrode (5) by means of a punch (24) in such a way that the second electrode (5) makes contact with the spacer plate (26).

8. Method according to Claim 7, **characterized in that** the punch (24) is driven by a lever mechanism (28) or a linear drive.

9. Method according to Claim 7 or 8, **characterized in that** the shaping force of the punch (24) is limited by means of a force limiter (27).

## Revendications

1. Dispositif (2) permettant de régler un écart (A) entre une première électrode (4) et une deuxième électrode (5) d'une bougie d'allumage (1), comprenant :
- au moins un palier de butée (23), une plaquette d'écartement (26) et un poinçon (24) qui sont disposés le long d'un axe longitudinal (X-X),
- le palier de butée (23) étant conçu pour soutenir la bougie d'allumage (1),
- la plaquette d'écartement (26) étant disposée entre le palier de butée (23) et le poinçon (24) dans la direction de l'axe longitudinal (X-X),
- la plaquette d'écartement (26) étant conçue pour être disposée entre la première électrode (4) et la deuxième électrode (5), et
- le poinçon (24) étant conçu pour appliquer une force de déformation sur la deuxième électrode (5) dans la direction de l'axe longitudinal (X-X),
- **caractérisé en ce que** le dispositif (2) comprend un limiteur de force (27) qui limite une force de déformation maximale du poinçon (24).

2. Dispositif (2) selon la revendication 1, comprenant en outre un mécanisme à levier (28) qui déplace le poinçon (24) dans la direction de l'axe longitudinal (X-X).

3. Dispositif (2) selon la revendication 1, comprenant en outre un entraînement linéaire, en particulier un entraînement à broche, qui déplace le poinçon (24) dans la direction de l'axe longitudinal (X-X).

4. Dispositif (2) selon l'une quelconque des revendications précédentes, **caractérisé en ce qu'**au moins une surface d'appui (37) est prévue qui est conçue pour spécifier l'orientation de la bougie d'allumage (1) autour de l'axe longitudinal (X-X).

5. Dispositif (2) selon l'une quelconque des revendications précédentes, **caractérisé en ce qu'**au moins un assemblage clipsé (32) est prévu qui est conçu pour maintenir la bougie d'allumage (1) dans le dispositif (2), ou **en ce qu'**un logement est prévu qui présente au moins partiellement une forme négative de la bougie d'allumage à insérer.

6. Dispositif (2) selon l'une quelconque des revendications précédentes, **caractérisé en ce que** le palier de butée (23) est monté mobile au moyen d'un coulisseau (30) le long de l'axe longitudinal (X-X).

7. Procédé permettant de régler un écart (A) entre une première électrode (4) et une deuxième électrode (5) d'une bougie d'allumage (1) au moyen d'un dispositif (2) selon l'une quelconque des revendications précédentes, comprenant les étapes consistant à :
- insérer la bougie d'allumage (1) dans le dispositif (2), une plaquette d'écartement (26) étant positionnée entre la première électrode (4) et la deuxième électrode (5), et
- appliquer à la deuxième électrode (5) une force de déformation au moyen d'un poinçon (24) de telle sorte que la deuxième électrode (5) entre en contact avec la plaquette d'écartement (26).

8. Procédé selon la revendication 7, **caractérisé en ce que** le poinçon (24) est entraîné par un mécanisme à levier (28) ou un entraînement linéaire.

9. Procédé selon la revendication 7 ou 8, **caractérisé en ce que** la force de déformation du poinçon (24) est limitée au moyen d'un limiteur de force (27).
